# EUROPEAN PATENT SPECIFICATION

(11) **EP 0 482 830 B1**
(45) Date of publication and mention of the grant of the patent: **13.12.1995**
(21) Application number: 91309614.5
(22) Date of filing: 17.10.1991
(51) Int. Cl.: B29D 30/30

(54) **Process for manufacturing green tyre and apparatus for the same**
Verfahren und Vorrichtung zur Herstellung von grünen Reifen
Procédé et dispositif pour la fabrication d'ébauches de pneus

(30) Priority: 20.10.1990 JP 282893/90
(43) Date of publication of application: 29.04.1992
(73) Proprietor: SUMITOMO RUBBER INDUSTRIES LIMITED, Chuo-ku Kobe-shi Hyogo 651 (JP)
(72) Inventor: Nojiri, Yasushi, Kobe-shi, Hyogo (JP); Fukaya, Yasushi, Shirakawa-shi, Fukushima (JP); Kida, Junichi, Shirakawa-shi, Fukushima (JP)
(74) Representative: Stewart, Charles Geoffrey

(56) References cited:
- EP-A- 0 104 303
- WO-A-89/08546
- DE-A- 2 740 609
- US-A- 4 105 487
- US-A- 4 398 988
- US-A- 4 769 104

## Description

This invention relates to a process and apparatus for manufacturing a green tyre and in particular to supplying a tyre component, such as a nylon band, to a belt building drum and attaching the tyre component.

As a process and apparatus for manufacturing a green tyre, there has been known, for example, the process and apparatus disclosed in Examiner Japanese Patent Publication SHO 53-24463.

In this conventional process and apparatus the supply of a steel breaker, as an example of a tyre component, has been carried out as follows.

The steel breaker is unwound from a roll and fed to a conveyor for supplying the steel breaker. The steel breaker is guided by a mechanism to correct snaky or meandering movement thereof, then fed forward on the supply conveyor to a conveyor for attaching the steel breaker around the belt drum. The supply conveyor and the attaching conveyor are driven in synchronism or independently of each other.

The steel breaker supplied onto the attaching conveyor is cut to a predetermined length by a cutter mechanism. The steel breaker thus cut to a predetermined length is fed onto the attaching conveyor to a predetermined position, where it is stopped.

A movable frame supporting the attaching conveyor is moved forward, so that a front portion of the attaching conveyor is brought close to a belt building drum. A press roll provided at a front portion of the attaching conveyor is pressed against the belt building drum and the attaching conveyor is driven to feed and attach the steel breaker around the rotating belt building drum.

As such a tyre components, a nylon band is also known (see, for example, Unexamined Japanese Patent Publication HEI 1-249429).

Such nylon band material is very poor in nerve, compared to a steel breaker, and is liable to follow a snaky or meandering path during feeding thereof. Conventionally, therefore, it has been found impossible to automatically supply the nylon band by the foregoing supplying system, and so the nylon band has had to be manually supplied and attached to the belt building drum.

US-A-4769104 describes an apparatus for sticking a tyre component onto a tyre forming drum via an endless belt conveyor. The conveyor is fitted with magnetic attracting means suitable for holding tyre components containing ferromagnetic material. Alternatively it is proposed to hold other tyre material by vacuum applied through holes in the belt.

It is an object of this invention to provide a process and apparatus for manufacturing a green tyre by which a tyre component, even if weak in nerve, can be supplied and attached around a belt drum without causing a snaky or meandering movement or wrinkling of the material.

Accordingly one aspect of the invention there is provided a process for manufacturing a green tyre, comprising the steps of unwinding a tyre component shaped in strip form and wound in a roll, out of a feed roll device, transporting the tyre component held by suction on a conveyor to a belt drum and winding the tyre component around the belt drum characterised in that the transportation of the tyre component comprises the steps of guiding a front end of the tyre component onto a suction table, suctioning the tyre component disposed on the suction table, advancing the suction table until the front end of the tyre component disposed on the suction table is positioned directly below a belt drum of a tyre manufacturing device, lifting the suction table to a position whereby the front end of the tyre component disposed on the suction table buts with the belt drum, terminating the step of suctioning the tyre component disposed on the suction table, rotating the belt drum and advancing the suction table in synchronism with rotation of the belt drum such that the travelling velocity of the suction table is equal to the circumferential velocity of the belt drum to wind the tyre component around the belt drum, terminating rotation of the belt drum and advancing of the suction table and then moving the suction table downward when the tyre component is wound around the belt drum for a distance of from 1/8 to 1/6 times the circumference of the belt drum, moving the suction table backwards until a press roller mounted on the front end of the suction table is positioned below the belt drum, resuming rotation of the belt drum and guiding two longitudinal sides of the tyre component with guide members to prevent snaking of the tyre component, terminating rotation of the belt drum and then suctioning the tyre component onto the suction table upon a predetermined length of the tyre component being wound around the belt drum, cutting the tyre component, lifting the press roller to an abutting position with the belt drum, and terminating the suction effect of the suction table, resuming rotation of the belt drum, and terminating rotation of the belt drum and retracting the suction table to its initial position when the tyre component is completely wound around the belt drum.

According to a second aspect of the invention a green tyre manufacturing apparatus comprising conveying means for holding by suction a tyre component in sheet or strip form and conveying it to and winding it around a belt drum characterised in that the conveying means for holding by suction a tyre component in sheet or strip form and conveying it to and winding it around a belt drum characterized in that the conveying means comprises a suction table having a guide surface for guiding the tyre component in planar form and cutting means for cutting the tyre component at a front end portion of the suction table and a press roller adjacent to the front end portion of the suction table for pressing the tyre component against the belt drum, the suction table being provided with suction means for holding the tyre component on the guide surface by suction and means for releasing the suction, and drive means for moving the suction table forward to a position at the lower side of the belt drum in synchronism with the rotation of the belt drum such that the travelling velocity of the suction table is equal to the circumferential velocity of the belt drum and backward from that position arid a guide member on each side of the suction table, the guide members being retractable so they may protrude above and retract from the guide surface.

Accordingly guide members are provided on each side of the suction table which are retractable so that they can protrude above or retract below the guide surface. The guide members may be secured to one side of an L-shaped arm, an intermediate portion of the arm being supported on a block reciprocatable transverse to the direction of movement of the tyre components so that the arm may be pivoted on a horizontal shaft extending in a front to rear direction and the guide members are each provided with a cam follower at the other end thereof, cam members secured to side portions of the suction table, the cam members each having a roughly inverted V-shaped cam groove for guiding the cam follower and drive means for reciprocating the block.

The apparatus also may include means for cutting the tyre component at the front of the suction table. The cutting means may comprise a guide rail carrying a base and a cutter rest supporting a cutter and pivotally mounted with a spring bias in the forward direction. A contact member is arranged to push the cutter rest against the spring when the base is in a standby position to retract the cutter below the guide surface.

As a result of this invention, a tyre component having a weak nerve, such as a nylon band, is placed on the suction table and can then be fed to the belt drum while being held on the table by suction, thus avoiding the component becoming snaky or following a meandering path or being wrinkled during the feeding thereof. It is therefore possible to successfully automatically attach the tyre component onto the belt drum with high accuracy.

An embodiment will now be described, by way of example only, in conjunction with the attached drawings in which:
Figure 1 is a general side view of a belt building servicer comprising a tyre component feeder according to this invention;
Figure 2 is an enlarged view of the tyre component feeder shown in Figure 1;
Figure 3 is a plan view of a suction table device;
Figure 4 is a plan view of a cutter device;
Figure 5 is a front view of the cutter device;
Figure 6 is a plan view of a guide device; and
Figure 7 is a plan view of the guide device.

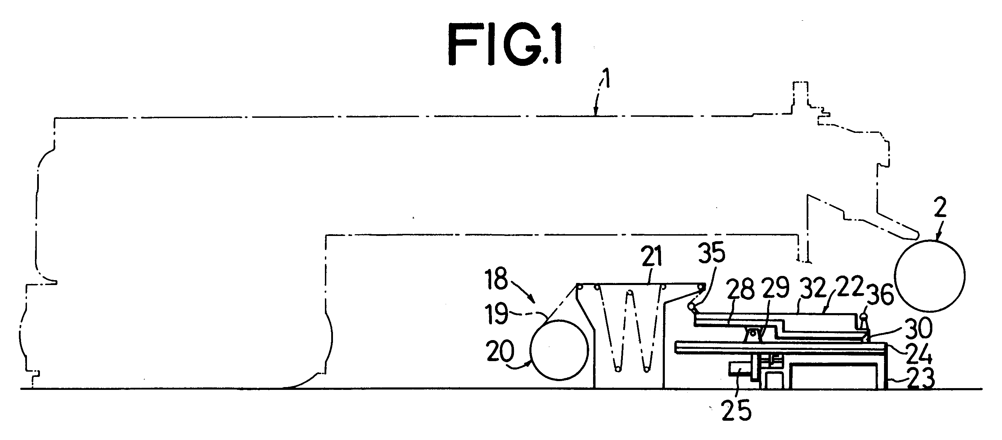

Referring to Figure 1, a breaker servicer 1 and a belt drum 2 are provided around which a steel breaker supply by the breaker servicer 1 can be attached. A tyre component feeder 18 is disposed in the dead space under the breaker servicer 1 and the belt drum 2.

A tyre component to be supplied by the tyre component feeder 18 may be, for example, a nylon band.

The tyre component feeder 18 consists primarily of a feed roll device 20 for letting off in an endless strip/sheet form nylon band material 19 therefrom, a festoon unit 21 disposed on the front side of the feed roll device 20 so as to provide festoon loops in the nylon band 19, and a suction table device 22 disposed on the front side of the festoon unit 21 and on the rear lower side of the belt drum 2.

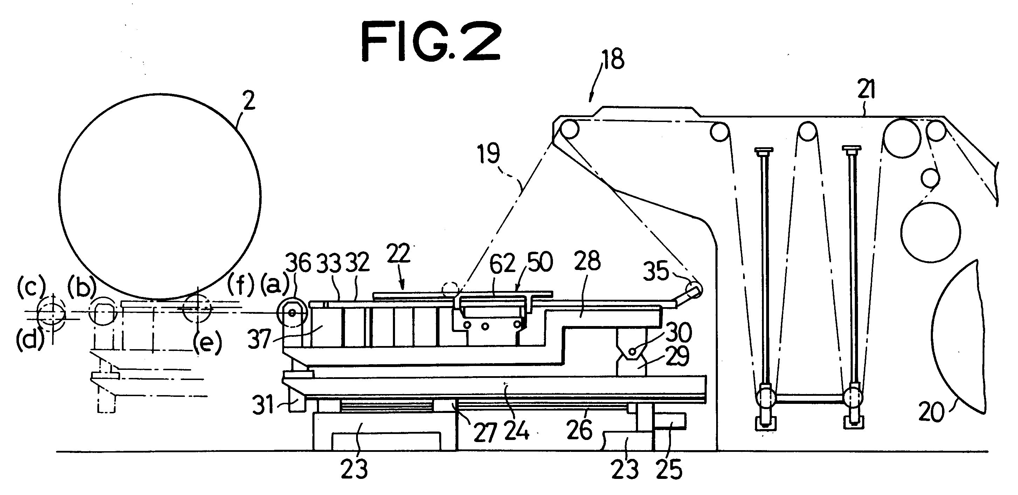

Figure 2 shows the detailed construction of the suction table device 22.

In Figure 2, numeral 23 denotes a base frame 23, on which a carriage 24 is supported to be horizontally movable forwards and backwards.

A nut 27 is secured to a lower surface of the carriage 24 and the base frame 23 is provided with a drive motor 25 and a feed screw 26 rotatable by the motor 25. The feed screw 26 and the nut 27 are inter-engaged.

On an upper surface of the carriage 24, an upper pivotable frame 28 is disposed in a vertically pivotable condition. This is by means of a bracket 29 provided projecting vertically on the rear portion of the carriage 24, and a rear portion of the upper pivotable frame 28 is supported on the bracket 29 by a pivot shaft 30 so that the upper frame 28 can be moved vertically about the shaft 30. Front portions of the carriage 24 and the upper frame 28 are interconnected by a lift cylinder 31.

A suction table 32 is provided on the upper side of the upper frame 28. The top face of the suction table 32 provides a flat guide surface 33 to guide the nylon band 19 in a planar state.

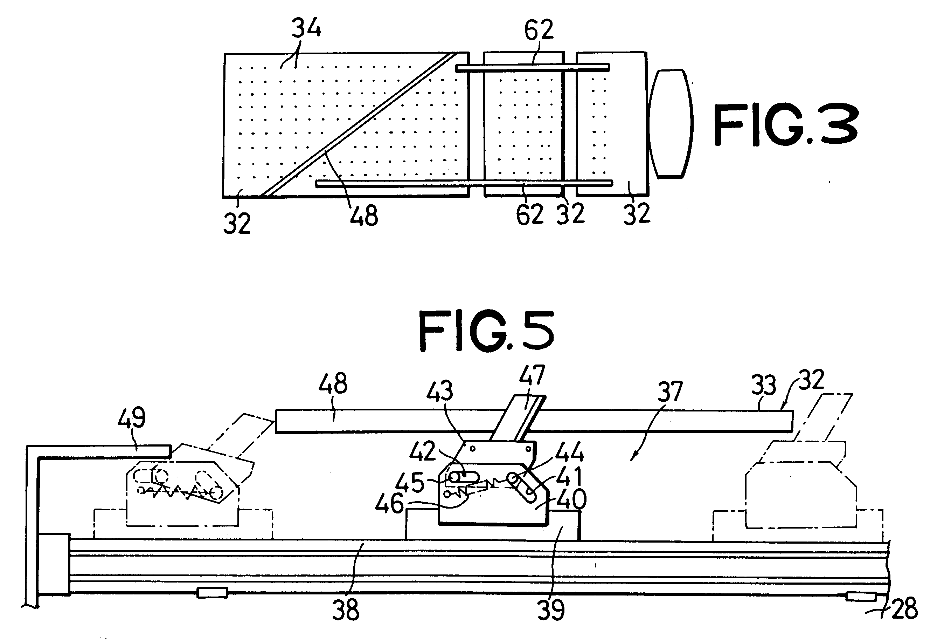

As shown in Figure 3, the suction table 32 has a plurality of suction holes 34 open to the guide surface 33. The suction holes 34 are connected to a vacuum source so that a nylon band 19 placed on the guide surface 33 can be hold on the guide surface 33 by suction. When the vacuum source is interrupted, the suction hold is released so that the nylon band 19 is once again freely slidable on the guide surface 33.

A guide roller 35 is provided at a rear portion of the upper frame 28 so that the nylon band 19 fed from the festoon unit 21 can be guided onto the suction table 32.

A pressure roller 36 is disposed at a front end portion of the upper pivotable frame 28.

A cutter device 37 for cutting the nylon band 19 is provided at a front portion of the pivotable frame 28, on the lower side of the suction table 32.

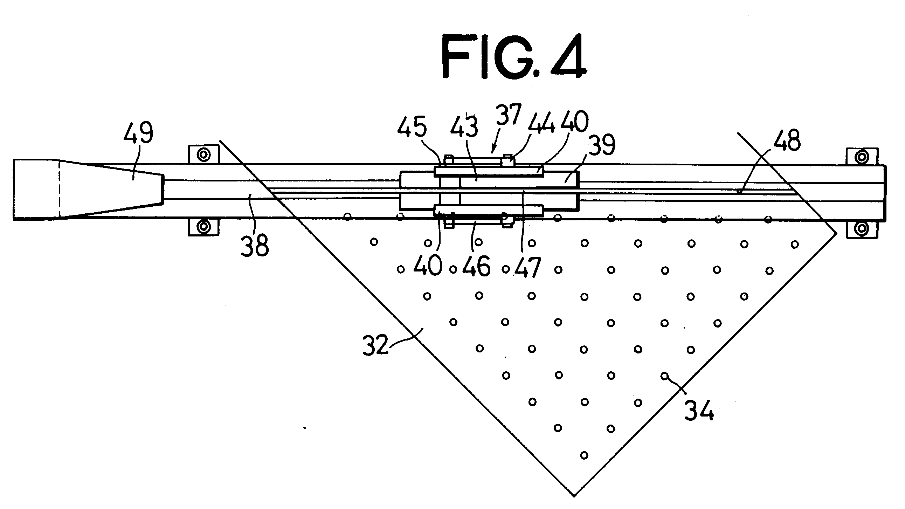

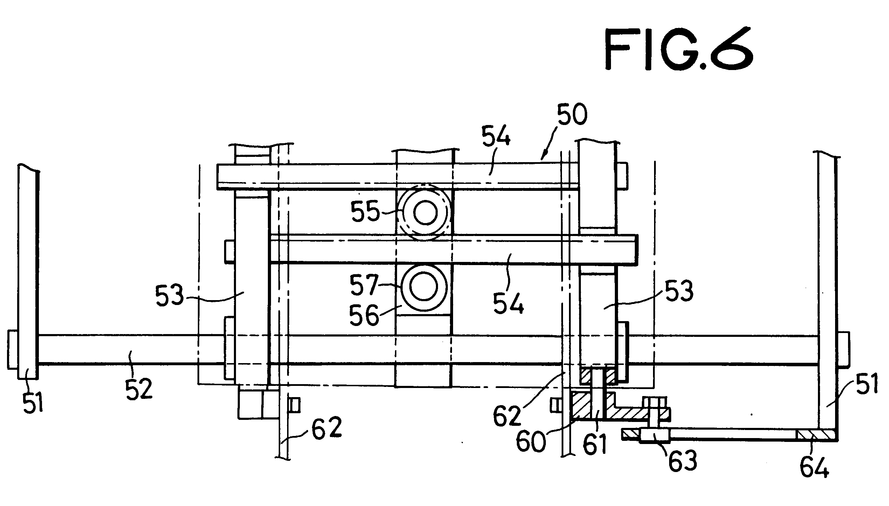

The cutter device 37 is shown in detail in Figures 4 and 5, and comprises a guide rail 38 mounted on the pivotable frame 28 arranged diagonally so as to intersect the feed direction of the nylon band 19 on the suction table 32 at a predetermined angle. A base 39 is disposed slidably on the guide rail 38. The base 39 can be moved reciprocally by an air cylinder (not shown).

The base 39 is fitted with a pair of guide plates 40 one on each side thereof. Each of the guide plates 40 is provided with a first guide groove 41 sloping downwardly and forwards, at a front portion thereof with respect to the sliding direction of the base 39 (namely, at a right-hand portion thereof in Figure 5), and with a horizontal second guide groove 42 at a rear portion thereof.

Between the pair of guide plates 40 is a movable cutter rest 43. A pair of front and rear pins 44 and 45 project from the cutter rest 43, and are slidably located in the first and second guide grooves 41 and 42, respectively. A tension spring 46 is disposed intermediately between the front pin 44 and the guide plate 40 so as to constantly urge the cutter rest 43 backwards.

A vertically upward projecting cutter 47 is mounted on the cutter rest 43. The suction table 32 is provided with a diagonal slot 48 to allow running of the cutter 47.

A contact member 49 is disposed to make contact with the cutter rest 43 when the base 39 comes to a standby position (the position indicated by the dash-and-dot lines on the left side in Figure 5). When the base 39 is moved to its standby position, an end portion of the cutter rest 43 makes contact with the contact member 49. When the base 39 is moved further leftwards in Figure 5, the cutter rest 43 is pushed by the contact member 49 against the spring 46, so that the pair of pins 44 and 45 move in the first and second guide grooves 41, and 42 respectively. As a result, the cutter 47 is tilted downwardly from its normal position, to be retracted (for storage) below the guide surface 33 which is the top face of the suction table 32, as indicated by the dash-and-dot lines on the left side in Figure 5.

When the base 39 is moved to the right in Figure 5, from the standby position, the cutter rest 43 is released by the contact member 49 and moved by the spring 46 and the cutter 47 is raised into its normal position. Then the cutter 47 protrudes above the guide surface 33 of the suction table 32, thereby allowing cutting of the nylon band 19 lying on the guide surface 33.

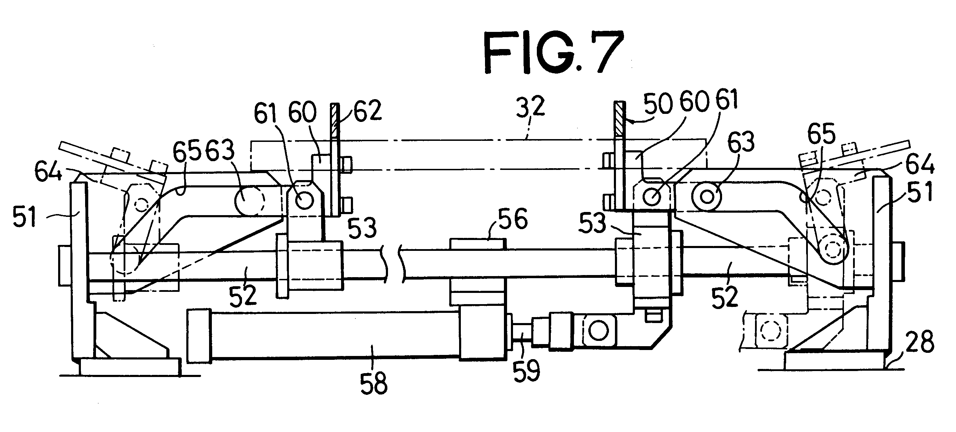

The pivotable frame 28 is provided with a guide device 50 for guiding the left and right side edges of the nylon band 19 on the suction table 32. The guide device 50 is shown in details in Figures 6 and 7.

The guide device 50 comprises a pair of left and right frames 51 secured to the pivotable frame 28 and a guide rod 52 provided between the frames 51. A pair of left and right blocks 53 are provided on the guide rod 52 so as to be movable to the left and right (in horizontal directions perpendicular to the feed direction of the nylon band). A pair of racks 54 project respectively from the left and right blocks 53 oppositely and in parallel to each other. The racks 54 are both in mesh with a common pinion 55 positioned between the racks 54. The pinion 55 is rotatably mounted on an intermediate frame 56 secured to the guide rod 52. Guide rollers 57 for guiding the back surfaces of the racks 54 are mounted on the intermediate frame 56 in a freely rotatable state so as to ensure proper engagement between the racks 54 and the pinion 55. On the lower side of the intermediate frame 56, a cylinder 58 as a drive means is mounted, and a piston rod 59 in the cylinder 58 is connected to one of the blocks 53.

When the piston rod 59 is retracted or extended, the left and right blocks 53 are synchronously moved by the same amount towards or away from each other by the racks 54 and the pinion 55.

On each of the blocks 53, and L-shaped arm 60 is pivotably supported by a pivot shaft 61. The shaft 61 is provided at an intermediate portion of the L-shaped arm 60. A guide member 62 is secured to an inner end portion of each L-shaped arm 60. The guide members 62 are each formed of a strip material. The guide members have two positions, a guide position, indicated by solid lines in Figure 7, in wich position the guide members 62 protrude above the top face of the suction table 32 so as to guide the side edges of the nylon band 19, and a standby position indicated by the dash-and-dot lines in Figure 7, which position is off (to the left or right) the suction table 32 and below the top face of the table 32.

A cam follower 63 is attached to the other end of each L-shaped arm 60. The cam followers 63 are each slidably engaged in a cam groove 65 of a cam member 64, which is secured to the frame 51. The cam grooves 65 have the approximate shape of an inverted V.

When the piston rod 59 of the cylinder 58 is extended to move the left and right blocks 53 outwards, i.e. respectively to the left and to the right, the cam followers 63 roll within the cam grooves 65, and the L-shaped arms 60 are each pivoted approximately 90° into the position indicated by the dash-and-dot lines in Figure 7. In this position, the upper ends of the arms 60 are located below the top face of the suction table 32.

Now, the process for manufacturing a green tyre by attaching a nylon band 19 onto the belt drum 2 in the tyre component feeder 18 having the construction as described above will be described.

Steel breaker fabric supplied from the breaker servicer 1 is already attached around the belt drum 2, and the description relates to attaching a nylon band 19 onto the steel breaker.

First, the nylon band 19 supplied in the form of a continuous sheet from a feed roll device 20 via the festoon unit 21 and is held on the guide surface 33 of the suction table 32 by suction. The front end of the nylon band 19 is bias cut by the cutter 47 of the cutter device 37. At this time, the carriage 24 is in the retracted position indicated by the solid lines in Figure 2 (position (a)), and the guide members 62 of the guide device 50 are each in the standby position indicated by the dash-and-dot lines in Figure 7.

Next, the drive motor 25 is started to rotate the feed screw 26, thereby moving the carriage 24 forwards. Because the suction holes 34 in the suction table 32 are connected to the vacuum source to hold the nylon band 19 onto the guide surface 33 by suction, the nylon band 19 is bed forward according to the movement of the carriage 24.

When the front end of the nylon band 19 on the suction table 32 reaches a position directly below the belt drum 2, the motor 25 is stopped, so that the movement of the carriage 24 is stopped.

Subsequently, the lift cylinder 31 is operated to lift up the front portion of the pivotable frame 28, whereby the front end portion of the nylon band 19 on the suction table 32 is brought to the outer peripheral surface of the belt drum 2, and brought into contact with the surface of the steel breaker already on the drum (position (b)).

Then, the communication between the suction holes 34 in the suction table 32 and the vacuum source is broken to release the nylon band 19 from the suction hold.

Then, the belt drum 2 and the carriage 24 are driven synchronously, that is they are operated in synchronism such that the circumferential velocity of the belt drum 2 is equal to the travelling velocity of the carriage 24. By the synchronous operation, the nylon band 19 on the suction table 32 is wound around the outer peripheral surface of the belt drum 2.

When the front end portion of the nylon band 19 has been wound for a distance of from 1/6 to 1/8 times the circumference of the belt drum 2, the operation of the carriage 24 and the rotation of the belt drum 2 are stopped (position (c)). The lift cylinder 31 is then operated to slightly lower the front end portion of the pivotable frame 28, so that the pressure against the nylon band 19 is released.

Subsequently, the motor 25 for the carriage 24 is driven in reverse, thereby moving the carriage 24 backwards. When the press roller 36 reaches the front portion of the carriage, i.e position (e) in Figure 2, the backwards movement of the carriage 24 is stopped. The piston rod 59 in the cylinder 58 of the guide device 50 is then contracted to bring the guide members 62 from the standby position into the guide position, and both side edges of the nylon band 19 are guided by the left and right guide members 62.

Next, the rotation of the belt drum 2 is restarted, whereupon the nylon band 19 still on the suction table 32 is fed forwards sliding on the guide surface 33, both side edges of the band 19 being guided by the guide members 62. Thus, the nylon band 19 does not snake or meander during the forward feeding thereof.

When the nylon band 19 is wound around the belt drum 2 by a predetermined amount, the rotation of the drum 2 is stopped. The suction holes 34 of the suction table 32 are then reconnected to the vacuum source, to suck the nylon band 19 onto the guide surface 33.

Subsequently, the cutter 47 of the cutter device 37 is moved from the left position to the right position, in Figure 5, thereby again cutting the nylon band 19. The cutting is carried out with the nylon band 19 pressed by a pressing means (not shown) from above the cutting position. After the cutting, the cutter 47 is returned to its initial, standby position.

On completion of the cutting, the press roller 36 is moved upwards by the lift cylinder 31 to contact with the belt drum 2 (position (f)). Then, the belt drum 2 is rotated again, to wind the remaining portion of the nylon band 19 thereon. At this stage, the communication between the suction holes 34 on the front side of the slit 48 and the vacuum source has been broken to release the suction, and the nylon band 19 is pressed against the belt drum 2 by the press roller 36.

After the residual portion of the nylon band 19 is completely wound around the belt drum 2, the carriabe 24 is moved back to its initial position (a), the step of attaching the nylon band 19 onto the belt drum 2 having been completed.

It is to be understood that this invention is not limited to or by the above embodiment.

## Claims

1. A process for manufacturing a green tyre, comprising the steps of unwinding a tyre component (19) shaped in strip form and wound in a roll, out of a feed roll device (20), transporting the tyre component (19) held by suction on a conveyor to a belt drum (2) and winding the tyre component (19) around the belt drum (2) characterised in that the transportation of the tyre component (19) comprises the steps of guiding a front end of the tyre component onto a suction table (32), suctioning the tyre component (19) disposed on the suction table (32), advancing the suction table (32) until the front end of the tyre component (19) disposed on the suction table (32) is positioned directly below a belt drum (2) of a tyre manufacturing device, lifting the suction table (32) to a position whereby the front end of the tyre component (19) disposed on the suction table (32) abuts with the belt drum (2), terminating the step of suctioning the tyre component (19) disposed on the suction table (32), rotating the belt drum (2) and advancing the suction table (32) in synchronism with rotation of the belt drum (2) such that the travelling velocity of the suction table (32) is equal to the circumferential velocity of the belt drum (2) to wind the tyre component (19) around the belt drum (2), terminating rotation of the belt drum (2) and advancing of the suction table (32) and then moving the suction table (32) downward when the tyre component (19) is wound around the belt drum (2) for a distance of from 1/8 to 1/6 times the circumference of the belt drum (2), moving the suction table (32) backwards until a press roller (36) mounted on the front end of the suction table (32) is positioned below the belt drum (2), resuming rotation of the belt drum (2) and guiding two longitudinal sides of the tyre component with guide members (62) to prevent snaking of the tyre component (19), terminating rotation of the belt drum (2) and then suctioning the tyre component (19) onto the suction table (32) upon a predetermined length of the tyre component (19) being wound around the belt drum (2), cutting the tyre component, lifting the press roller (36) to an abutting position with the belt drum (2), and terminating the suction effect of the suction table (32), resuming rotation of the belt drum (2), and terminating rotation of the belt drum (2) and retracting the suction table (32) to its initial position when the tyre component (19) is completely wound around the belt drum.

2. A green tyre manufacturing apparatus comprising conveying means for holding by suction a tyre component (19) in sheet or strip form and conveying it to and winding it around a belt drum (2) characterised in that the conveying means comprises a suction table (32) having a guide surface (33) for guiding the tyre component (19) in planar form and cutting means (37) for cutting the tyre component (19) at a front end portion of the suction table (32) and a press roller (36) adjacent to the front end portion of the suction table (32) for pressing the tyre component (19) against the belt drum (2), the suction table (32) being provided with suction means for holding the tyre component (19) on the guide surface (33) by suction and means for releasing the suction, and drive means (25,26) for moving the suction table (32) forward to a position at the lower side of the belt drum (2) in synchronism with the rotation of the belt drum such that the travelling velocity of the suction table (32) is equal to the circumferential velocity of the belt drum (2) and backward from that position and a guide member (62) on each side of the suction table (32), the guide members (62) being retractable so they may protrude above and retract from the guide surface.

3. A green tyre manufacturing apparatus according to claim 2 characterised in that the guide members (62) are each secured to one side of an L-shaped arm (60), an intermediate portion of the arm being supported on a block (53) reciprocatable transverse to the direction of movement of the tyre components so that the arm (60) may he pivoted on a horizontal shaft (61) extending in a front to rear direction and the guide members (62) are each provided with a cam follower (63) at the other end thereof, cam members (64) secured to side portions of the suction table, the cam members (64) each having a roughly inverted V-shaped cam groove (65) for guiding the cam follower (63) and drive means (58) for reciprocating the block (53).

4. A green tyre manufacturing apparatus according to claims 2 or 3, characterised by the cutting means (37) comprising a guide rail (38) disposed on the lower side of the guide surface (33) of the suction table (32), a base (39) slidably located on the guide rail (38), first and second guide grooves (41,42) provided respectively in a front portion and a rear portion of the bead (39) with respect to the sliding direction of the base (39), the first guide groove (41) being sloped downwardly and forwards, and the second guide groove (42) being horizontal, a cutter rest (43) having pins (44,45) slidably fitted in the first and second guide grooves (41,42), respectively, a cuter (47) mounted on the cutter rest (43), an elastic member (46) for urging the cutter rest (43) forward, and a contact member (49) which, when the base (39) is moved to a standby position, makes contact with the cutter rest (43) and pushes the cutter rest (43) against the elastic member (46) so as to position the pins (44,45) into front end portions of the first and second guide grooves (41,42), thereby retracting the cutter (37) to below the guide surface (33).

## Patentansprüche

1. Ein Verfahren zur Herstellung eines grünen Reifens, das die Schritte umfaßt, daß eine Reifenkomponente (19), die in Streifenform gestaltet ist und auf eine Rolle gewickelt ist, abgewickelt wird, und zwar aus einer Aufgeberollvorrichtung (20), die Reifenkomponente (19), die durch Saugen auf einem Förderer gehalten wird, zu einer Gürteltrommel (2) transportiert wird, und die Reifenkomponente (19) um die Gürteltrommel (2) gewickelt wird, dadurch gekennzeichnet, daß der Transport der Reifenkomponente (19) die Schritte umfaßt, daß ein Vorderende der Reifenkomponente auf einen Saugtisch (32) geführt wird, die Reifenkomponente (19), die auf dem Saugtisch (32) angeordnet ist, angesaugt wird, der Saugtisch (32) vorgeschoben wird, bis das Vorderende der Reifenkomponente (19), die auf dem Saugtisch (32) angeordnet ist, direkt unter einer Gürteltrommel (2) einer Reifenherstellungsvorrichtung positioniert ist, der Saugtisch (32) zu einer Position angehoben wird, wodurch das Vorderende der Reifenkomponente (19), die auf dem Saugtisch (32) angeordnet ist, mit der Gürteltrommel (2) anstößt, der Schritt beendet wird, daß die Reifenkomponente (19), die auf dem Saugtisch (32) angeordnet ist, angesaugt wird, die Gürteltrommel (2) gedreht wird und der Saugtisch (32) in Synchronismus mit der Rotation der Gürteltrommel (2) vorgeschoben wird, derart, daß die Fahrgeschwindigkeit des Saugtisches (32) der Umfangsgeschwindigkeit der Gürteltrommel (2) gleich ist, um die Reifenkomponente (19) um die Gürteltrommel (2) zu wickeln, die Rotation der Gürteltrommel (2) und das Vorschieben des Saugtisches (32) beendet wird, und dann der Saugtisch (32) abwärts bewegt wird, wenn die Reifenkomponente (19) um die Gürteltrommel (2) um einen Abstand von ab 1/8 bis 1/6 mal den Umfang der Gürteltrommel (2) gewickelt wird, der Saugtisch (32) rückwärts bewegt wird, bis eine Druckrolle (36), die auf dem Vorderende des Saugtisches (32) angebracht ist, unter der Gürteltrommel (2) positioniert ist, die Rotation der Gürteltrommel (2) wieder aufgenommen wird, und zwei longitudinale Seiten der Reifenkomponente mit Führungsgliedern (62) geführt werden, um Schlängeln der Reifenkomponente (19) zu verhindern, die Rotation der Gürteltrommel (2) beendet wird, und dann die Reifenkomponente (19) auf den Saugtisch (32) angesaugt wird, wenn eine vorbestimmte Länge der Reifenkomponente (19) um die Gürteltrommel (2) gewickelt ist, die Reifenkomponente geschnitten wird, die Druckrolle (36) zu einer Anstoßposition mit der Gürteltrommel (2) angehoben wird, und der Saugeffekt auf dem Saugtisch (32) beendet wird, die Rotation der Gürteltrommel (2) wieder aufgenommen wird und die Rotation der Gürteltrommel (2) beendet wird und der Saugtisch (32) zu seiner anfänglichen Position zurückgezogen wird, wenn die Reifenkomponente (19) vollständig um die Gürteltrommel gewickelt ist.

2. Eine Grünreifenherstellungsvorrichtung, die ein Fördermittel zum Halten durch Saugen einer Reifenkomponente (19) in Blatt- oder Streifenform und Fördern davon zu und wickeln davon um eine Gürteltrommel (2) umfaßt, dadurch gekennzeichnet, daß das Fördermittel umfaßt einen Saugtisch (32) mit einer Führungsoberfläche (33) zum Führen der Reifenkomponente (19) in planarer Form und ein Schneidemittel (37) zum Schneiden der Reifenkomponente (19) bei einem Vorderendteil des Saugtisches (32) und eine Druckrolle (36) benachbart dem Vorderendteil des Saugtisches (32) zum Fressen der Reifenkomponente (19) gegen die Gürteltrommel (2), wobei der Saugtisch (32) mit einem Saugmittel zum Halten der Reifenkomponente (19) auf der Führungsoberfläche (33) durch Saugen und ein Mittel zum Lösen des Saugens vorgesehen ist, und ein Antriebsmittel (25, 26) zum Bewegen des Saugtisches (32) vorwärts zu einer Position bei der unteren Seite der Gürteltrommel (2) in Synchronismus mit der Rotation der Gürteltrommel derart, daß die Fahrgeschwindigkeit des Saugtisches (32) der Umfangsgeschwindigkeit der Gürteltrommel (2) gleich ist, und rückwärts von dieser Position, und ein Führungsglied (62) auf jeder Seite des Saugtisches (32), wobei die Führungsglieder (62) zurückziehbar sind, so daß sie über die Führungsoberfläche hervorstehen können und sich davon zurückziehen können.

3. Eine Grünreifenherstellungsvorrichtung nach Anspruch 2, dadurch gekennzeichnet, daß die Führungsglieder (62) jedes an einer Seite eines L-förmigen Armes (60) befestigt sind, wobei ein intermediärer Teil des Armes auf einem Block (53) getragen wird, und zwar quer zu der Richtung der Bewegung der Reifenkomponenten hin- und herbewegbar, so daß der Arm (60) auf einer horizontalen Welle (61) geschwenkt werden kann, die sich in einer Richtung von vorne nach hinten erstreckt, und die Führungsglieder (62) jeder mit einem Nockenstößel (63) bei dem anderen Ende davon vorgesehen sind, wobei die Nockenglieder (64) an Seitenteilen des Saugtisches befestigt sind, die Nockenglieder (64) jedes eine grob invertierte V-förmige Nockenfurche (65) zum Führen des Nockenstößels (63) und ein Antriebsmittel (58) zum Hin- und Herbewegen des Blockes (53) aufweisen.

4. Eine Grünreifenherstellungsvorrichtung nach Anspruch 2 oder 3, dadurch gekennzeichnet, daß das Schneidemittel (37) eine Führungsschiene (38) umfaßt, die auf der unteren Seite der Führungsoberfläche (33) des Saugtisches (32) angeordnet ist, eine Basis (39), die auf der Führungsschiene (38) gleitfähig angeordnet ist, erste und zweite Führungsfurchen (41, 42), die respektive in einem vorderen Teil und einem hinteren Teil des Wulstes (39) mit Bezug auf die Gleitrichtung der Basis (39) angeordnet sind, wobei die erste Führungsfurche (41) abwärts und vorwärts geneigt ist, und die zweite Führungsfurche (42) horizontal liegt, eine Schneiderauflage (43) mit Dornen (44, 45), die in den ersten und zweiten Führungsfurchen (41, 42) respektive eingepaßt sind, einen Schneider (47), der auf der Schneiderauflage (43) angebracht ist, ein elastisches Glied (46) zum Drängen der Schneiderauflage (43) vorwärts, und ein Kontaktglied (49), welches, wenn die Basis (39) zu einer Bereitschaftsposition bewegt wird, Berührung mit der Schneiderauflage (43) herstellt und die Schneiderauflage (43) gegen das elastische Glied (46) drückt, um so die Dorne (44, 45) in Vorderendteile der ersten und zweiten Führungsfurchen (41, 42) zu positionieren, wodurch der Schneider (37) nach unterhalb der Führungsoberfläche (33) zurückgezogen wird.

## Revendications

1. Procédé de fabrication d'un pneumatique non vulcanisé, comprenant les étapes suivantes : le déroulement d'un élément constituant de pneumatique (19) ayant une forme de bande et enroulé sur un rouleau, à l'aide d'un dispositif (20) à rouleau d'alimentation, le transport de l'élément constituant de pneumatique (19) maintenu par aspiration sur un transporteur vers un tambour (2) de ceinture, et l'enroulement de l'élément constituant de pneumatique (19) autour du tambour (2) de ceinture, caractérisé en ce que le transport de l'élément constituant de pneumatique (19) comporte les étapes suivantes : le guidage d'une extrémité avant de l'élément constituant de pneumatique sur une table d'aspiration (32), l'aspiration de l'élément constituant de pneumatique (19) placé sur la table (32), l'avance de la table d'aspiration (32) jusqu'à ce que l'extrémité avant de l'élément constituant de pneumatique (19) placé sur la table (32) se trouve juste au-dessous d'un tambour (2) de ceinture d'un appareil de confection de pneumatique, le soulèvement de la table d'aspiration (32) vers une position telle que l'extrémité avant de l'élément constituant de pneumatique (19) placé sur la table (32) est en butée contre le tambour de ceinture (2), l'interruption de l'étape d'aspiration de l'élément constituant de pneumatique (19) placé sur la table d'aspiration (32), l'entraînement en rotation du tambour de ceinture (2) et l'avance de la table d'aspiration (32) en synchronisme avec la rotation du tambour de ceinture (2) afin que la vitesse de déplacement de la table d'aspiration (32) soit égale à la vitesse circonférentielle du tambour de ceinture (2) et assure l'enroulement de l'élément constituant de pneumatique (19) autour du tambour de ceinture (2), l'interruption de la rotation du tambour de ceinture (2) et l'avance de la table d'aspiration (32), puis le déplacement de la table d'aspiration (32) vers le bas lorsque l'élément constituant de pneumatique (19) est enroulé autour du tambour de ceinture (2) d'une distance comprise entre le huitième et le sixième de la circonférence du tambour de ceinture (2), le déplacement vers l'arrière de la table d'aspiration (32) jusqu'à ce qu'un rouleau de pression (36) monté à l'extrémité avant de la table d'aspiration (32) se trouve sous le tambour de ceinture (2), la reprise de la rotation du tambour de ceinture (2) et le guidage des deux côtés longitudinaux de l'élément constituant de pneumatique avec des organes de guidage (62) afin que l'élément constituant de pneumatique (19) ne puisse pas suivre un trajet sinueux, l'interruption de la rotation du tambour de ceinture (2) puis l'aspiration de l'élément constituant de pneumatique (19) sur la table d'aspiration (32) jusqu'à ce qu'une longueur prédéterminée de l'élément constituant de pneumatique (19) soit enroulée sur le tambour de ceinture (2), la découpe de l'élément constituant de pneumatique, le soulèvement du rouleau de pression (36) vers une position en butée contre le tambour de ceinture (2), et l'interruption de l'effet d'aspiration de la table d'aspiration (32), la reprise de la rotation du tambour de ceinture (2), puis l'interruption de la rotation du tambour de ceinture (2) et le recul de la table d'aspiration (32) vers sa position initiale lorsque l'élément constituant de pneumatique (19) est totalement enroulé autour du tambour de ceinture.

2. Appareil de fabrication d'un pneumatique non vulcanisé, comprenant un dispositif de transport destiné à maintenir par aspiration un élément constituant de pneumatique (19) en forme de feuille ou de bande et à le transporter vers un tambour de ceinture (2) et à l'enrouler autour de celui-ci, caractérisé en ce que le dispositif de transport comporte une table d'aspiration (32) ayant une surface (33) de guidage de l'élément constituant de pneumatique (19) sous forme plane, un dispositif (37) de coupe de l'élément constituant de pneumatique (19) à une partie d'extrémité avant de la table d'aspiration (32), un rouleau de pression (36) adjacent à la partie d'extrémité avant de la table d'aspiration (32) et destiné à repousser sous pression l'élément constituant de pneumatique (19) contre le tambour de ceinture (2), la table d'aspiration (32) ayant un dispositif d'aspiration destiné à maintenir l'élément constituant de pneumatique (19) sur la surface de guidage (33) par aspiration, un dispositif destiné à supprimer l'aspiration, un dispositif (25, 26) d'entraînement destiné à déplacer la table d'aspiration (32) vers l'avant, vers une position se trouvant à la face inférieure du tambour de ceinture (2) en synchronisme avec la rotation du tambour de ceinture afin que la vitesse de déplacement en translation de la table d'aspiration (32) soit égale à la vitesse circonférentielle du tambour de ceinture (2), puis vers l'arrière depuis cette position, et un organe de guidage (62) placé de chaque côté de la table d'aspiration (32), les organes de guidage (62) pouvant avancer afin qu'ils puissent dépasser au-dessus de la surface de guidage et reculer au-dessous de celle-ci.

3. Appareil de fabrication de pneumatique non vulcanisé selon la revendication 2, caractérisé en ce que les organes de guidage (62) sont fixés chacun à un premier côté d'un bras en L (60), une partie intermédiaire du bras étant supportée par un bloc (53) qui peut se déplacer en translation transversalement à la direction de déplacement des éléments constituants de pneumatique afin que le bras (60) puisse pivoter sur un arbre horizontal (61) disposé dans la direction avant-arrière, et les organes de guidage (62) comportent chacun un toucheau de came (63) à son autre extrémité, des organes de came (64) étant fixés à des parties latérales de la table d'aspiration, les organes de came (64) ayant chacun une gorge de came (65) ayant une forme globale de V retourné pour le guidage du toucheau de came (63), et un dispositif (58) d'entraînement destiné à assurer le déplacement alternatif du bloc (53).

4. Appareil de fabrication d'un pneumatique non vulcanisé selon la revendication 2 ou 3, caractérisé en ce que le dispositif de coupe (37) comporte un rail de guidage (38) placé à la face inférieure de la surface de guidage (33) de la table d'aspiration (32), une base (39) placée afin qu'elle puisse coulisser sur le rail de guidage (38), une première et une seconde gorge de guidage (41, 42) placées respectivement à une partie avant et une partie arrière de la base (39) par rapport à la direction de coulissement de la base (39), la première gorge de guidage (41) étant inclinée vers le bas et vers l'avant, la seconde gorge de guidage (42) étant horizontale, un organe (43) d'appui d'organe de coupe ayant des broches (44, 45) qui peuvent coulisser dans la première et la seconde gorge de guidage (41, 42) respectivement, un organe de coupe (47) monté sur l'organe d'appui (43), un organe élastique (46) destiné à repousser l'organe d'appui (43) vers l'avant, et un organe de contact (49) qui, lorsque la base (39) est déplacée vers une position d'attente, vient au contact de l'organe d'appui (43) de l'organe de coupe et pousse cet organe d'appui (43) contre l'organe élastique (46) afin que les broches (44, 45) soient placées dans les parties d'extrémité avant de la première et de la seconde gorge de guidage (41, 42), si bien que l'organe de coupe (37) recule au-dessous de la surface de guidage (33).
